# EUROPEAN PATENT SPECIFICATION

(11) **EP 2 325 069 B1**
(45) Date of publication and mention of the grant of the patent: **27.06.2012**
(21) Application number: 09176425.8
(22) Date of filing: 19.11.2009
(51) Int. Cl.: B62D 15/02, B60W 30/12, B60W 50/00

(54) **Method and system for controlling the lateral lane position of an automotive vehicle**
Verfahren und System zur Steuerung der seitlichen Spurposition eines Kraftfahrzeuges
Procédé et système pour le contrôle de la position latérale dans une voie d'un véhicule automobile

(43) Date of publication of application: 25.05.2011
(73) Proprietor: Volvo Car Corporation, 405 31 Göteborg (SE)
(72) Inventor: Szakaly, Alexander, 42135 Västra Frölunda (SE); Olsson, Claes, 43539 Mölnlycke (SE)
(74) Representative: Widahl, Jenny Marie

(56) References cited:
- DE-A1-102007 061 900
- US-A1- 2008 091 318

## Description

### Technical field

The present invention relates to a method for controlling the lateral lane position of an automotive vehicle in accordance with the preamble of claim 1. In addition, the present invention relates to an automotive vehicle lateral lane position control system in accordance with the preamble of claim 4.

### Background of the invention

Unintentional departure of a vehicle from a lane on a road or from a desired lateral position in a lane is a relevant cause of road accidents involving all sorts of vehicles, e.g. heavy duty, medium duty and light duty vehicles. Besides technical problems, the reasons for such departures from a lane or from a desired lateral position in a lane are many and range from the driver's inability to control the vehicle (for example on account of severe weather conditions) to lack of attention, drowsiness, distraction and intoxication or illness.

Currently, there are known automated systems, which are arranged to automatically control the lateral lane position of a vehicle, i.e. to automatically steer a vehicle to a desired lateral lane position. Such systems aid the driver in assuming an intended lateral driving position in a lane and, thus, remaining in the lane.

The known automated lateral lane position control systems receive information from a CCD (Charge-Coupled Device) camera or similar means concerning the actual lateral lane position of the vehicle and a closed feedback loop controller is utilized in order to steer the vehicle towards the desired lateral lane position by signaling to a steering system. The current control techniques utilized in the feedback loop are usually based on utilization of a model of the dynamics of the vehicle to be controlled. The model of the vehicle dynamics is a model that describes the evolution of the vehicle states over time given certain inputs, and may be described as a transfer function or a state space model or similar. The model of the vehicle dynamics may be used either as an integral part of the controller or for controller synthesis only.

The performance of the above mentioned closed feedback loop controller is to a great extent determined by the gain in the feedback loop. Thus, there is a need to utilize as high loop-gain as possible. However, a high loop-gain implies a high control signal activity, which for automatic steering is very clearly noticed by the driver (as sudden and jerky steering wheel movement).

Consequently, there are two conflicting requirements on the above mentioned closed feedback loop controller. In order to obtain a good performance of the controller, the loop-gain should be as high as possible. However, for comfort reasons, the loop-gain should be minimized. In addition, this is even further complicated by the fact that every reasonably good controller requires a derivative part to some extent and that currently available lane position measurement technologies for automotive production have significant delay and noise which makes it even more difficult to increase the loop-gain enough without sacrificing stability or comfort.

Thus, there is still a need for an improved method and an improved system for controlling the lateral lane position of an automotive vehicle, which at least essentially avoid the above mentioned conflicting requirements on the feedback controller.

### Summary of the invention

One object of the invention is to provide an improved method for controlling the lateral lane position of an automotive vehicle during a control operation from a start time point to an end time point.

This object is achieved by the method as claimed in claim 1.

Thanks to the provision of the steps of:
- providing an actual lateral lane position, an actual lateral velocity and an actual lateral acceleration for the start time point;
- providing a desired lateral lane position, a desired lateral velocity and a desired lateral acceleration for the end time point;
- providing a geometric model of a reference future lateral path of the vehicle from the actual lateral lane position for the start time point to the desired lateral lane position for the end time point, the geometric model comprising a lateral lane position function describing a path-based reference lateral lane position over time, a first derivative of the function describing a path-based reference lateral velocity over time, a second derivative of the function describing a path-based reference lateral acceleration over time and a third derivative of the function;
- providing the path-based reference lateral lane position, reference lateral velocity and reference lateral acceleration for a plurality of subsequent control time points from the geometric model, the subsequent control time points ranging from a time point, which is subsequent to the start time point, to the end time point,;
- performing the following steps for each respective control time point:
   o providing an actual lateral lane position, an actual lateral velocity and an actual lateral acceleration for the respective control time point;
   o determining a control error for the respective control time point by comparing the path-based reference lateral lane position, reference lateral velocity and reference lateral acceleration for the respective control time point with the actual lateral lane position, actual lateral velocity and actual lateral acceleration for the respective control time point;
   o calculating a reference feedback steering angle for the respective control time point by applying a feedback control function on the control error for the respective control time point; o providing a road-based reference lateral acceleration for the respective control time point;
   o calculating a total reference lateral acceleration for the respective control time point by adding the path-based reference lateral acceleration and the road-based reference lateral acceleration for the respective control time point;
   o calculating a reference feedforward steering angle for the respective control time point by applying a model of the inverse vehicle dynamics on the total reference lateral acceleration for the respective control time point;
   o providing an actual steering angle for the respective control time point;
   o adding the reference feedforward steering angle to the reference feedback steering angle for the respective control time point and determining a steering angle error for the respective control time point by comparing the actual steering angle for the respective control time point with the added reference feedforward steering angle and reference feedback steering angle for the respective control time point, and
   o providing a steering signal for the respective control time point based on the steering angle error for the respective control time point to a steering system of the vehicle,
   an improved method for controlling the lateral lane position of an automotive vehicle is provided.

A further object is to provide an improved automotive vehicle lateral lane position control system, which is arranged to perform a control operation from a start time point to an end time point.

This object is achieved by the system as claimed in claim 4.

Thanks to the provision of:
- at least one information input for connection to means for provision of an actual lateral lane position, an actual lateral velocity and an actual lateral acceleration for the start time point, an actual lateral lane position, an actual lateral velocity and an actual lateral acceleration for a plurality of subsequent control time points, and a road-based reference lateral acceleration for the plurality of subsequent control time points, the subsequent control time points ranging from a time point, which is subsequent to the start time point, to the end time point;
- a steering angle input for connection to means for provision of an actual steering angle for the plurality of subsequent control time points;
- means comprising a desired lateral lane position, a desired lateral velocity and a desired lateral acceleration, for the end time, point;
- means for providing a geometric model of a reference future lateral path of the vehicle from the actual lateral lane position for the start time point to the desired lateral lane position for the end time point, the geometric model comprising a lateral lane position function describing a path-based reference lateral lane position over time, a first derivative of the function describing a path-based reference lateral velocity over time, a second derivative of the function describing a path-based reference lateral acceleration over time and a third derivative of the function, and for providing the path-based reference lateral lane position, reference lateral velocity and reference lateral acceleration for the plurality of subsequent control time points from the geometric model;
- an arrangement comprising means for performing the following steps for each respective control time point:
   o determining a control error for the respective control time point by comparing the path-based reference lateral lane position, reference lateral velocity and reference lateral acceleration for the respective control time point with the actual lateral lane position, the actual lateral velocity and the actual lateral acceleration for the respective control time point;
   o calculating a reference feedback steering angle for the respective control time point by applying a feedback control function on the control error for the respective control time point;
   o calculating a total reference lateral acceleration for the respective control time point by adding the path-based reference lateral acceleration and the road-based reference lateral acceleration for the respective control time point;
   o calculating a reference feedforward steering angle for the respective control time point by applying a model of the inverse vehicle dynamics on the total reference lateral acceleration for the respective control time point, and
   o adding the reference feedforward steering angle to the reference feedback steering angle for the respective control time point, and determining a steering angle error for the respective control time point by comparing the actual steering angle for the respective control time point with the added reference feedforward steering angle and reference feedback steering angle for the respective control time point, and providing a steering signal for the respective control time point based on the steering angle error for the respective control time point; and
- an output for provision of the steering signal for each respective control time point to a steering system of the vehicle,
an improved automotive vehicle lateral lane position control system is provided.

Preferred embodiments are listed in the dependent claims.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of drawings

In the following, the invention will be described in greater detail by way of example only with reference to attached drawings, in which
Fig. 1 is a schematic illustration of one embodiment of a control system in accordance with the invention, whereby the control system is arranged in a vehicle,
Fig. 2 is a schematic illustration of the embodiment of the control system of figure 1 in more detail, and
Fig. 3 is a schematic flowchart of the steps of one embodiment of a method in accordance with the invention.

### Description of embodiments

The present invention relates to an automotive vehicle lateral lane position control system. In addition, the present invention relates to a method for controlling the lateral lane position of an automotive vehicle.

As mentioned above, conventional methods and systems for controlling the lateral lane position of a vehicle are based on utilization of a closed feedback loop controller and a model of the vehicle dynamics. However, as also described above, there are two conflicting requirements on the closed feedback loop controller in conventional control systems and methods. In order to obtain a good performance of the controller, the loop-gain should be as high as possible. However, for comfort reasons, the loop-gain should be minimized. In addition, this is even further complicated by the fact that every reasonably good controller requires a derivative part to some extent and that currently available lane position measurement technologies for automotive production have significant delay and noise which makes it even more difficult to increase the loop-gain, enough without sacrificing comfort and stability. Consequently, there is a need for another approach in lateral lane position controls, i.e. another method and system for controlling the lateral lane position of a vehicle.

The solution in accordance with the present invention is based on the realization that it is possible to increase the controller output (i.e. the feedback control signal) not only by reacting the control error from the feedback loop but also by directly adding a signal to the controller output based on some other information (a feedforward control signal). More specifically, the solution in accordance with the present invention involves utilization of a feedforward control signal which describes the required control signal for steering the vehicle to the desired lateral lane position when taking limitations on the vehicle dynamics into account and under the condition that no disturbances of the vehicle occur during the control operation. By adding this feedforward control signal to the controller output, the feedback loop does only need to have high enough gain to be able to handle any disturbance that occurs during the control operation. Low feedback gain also means that the control signal activity is lowered and that the controller sensitivity to input delay and input noise is lowered a lot, while still retaining good controller performance in terms of quickly achieving the desired lateral lane position.

It was realized that the feedforward control signal may be generated by utilization of a model of the inverse dynamics of the vehicle to be controlled (i.e. a model of the inverse vehicle dynamics) in case the lateral vehicle states (i.e. lateral lane position, lateral velocity, lateral acceleration, lateral jerk, etc.) during the control operation are known. However, the lateral vehicle states during the control operation are normally not known apriori. Therefore, in accordance with the invention a geometric model of the lateral vehicle states during the control operation is provided, i.e. a geometric model of a reference future lateral path of the vehicle from an actual lateral lane position for a start time point of a control operation to a desired lateral lane position for an end time point of the control operation is provided. The term "geometric model" means a model which describes the vehicle states without any inherent knowledge or description of the vehicle dynamics.

Thus, in order to obtain the feedforward control signal in accordance with the invention, a geometric model of the lateral vehicle states during the control operation is provided and the geometric model is passed through a model of the inverse vehicle dynamics.

The geometric model comprises a lateral lane position function, which describes a path-based reference lateral lane position over time. In addition, the geometric model comprises a lateral velocity function, a lateral acceleration function and a lateral jerk function, which are the first, second and third derivatives, respectively, of the lateral lane position function.

The lateral lane position function fulfills preferably the following requirements:
- function start = actual lateral lane position for the start time point of the control operation
- function end = desired lateral lane position for the end time point of the control operation
- start of first derivative = actual lateral velocity for the start time point of the control operation
- end of first derivative = desired lateral velocity for the end time point of the control operation
- start of second derivative = actual lateral acceleration for the start time point of the control operation
- end of second derivative = desired lateral acceleration for the end time point of the control operation
- third derivative is always less than a defined maximum allowed jerk (design parameter), and
- the lateral lane position function and the first, second and third derivatives thereof are continuous functions.

Since the lateral lane position function has to be recomputed very often it has to belong to a class of functions that are easy to compute and have the ability to accurately approximate the complete set of desired shapes. Preferably, the lateral lane position function is a piecewise polynomial function. The piecewise polynomial function may be derived by adapting a piecewise polynomial, which is continuous and whose first, second and third derivatives are continuous, to the above start and end requirements.

Thus, the geometric model describes the lateral vehicle states during the complete control operation, i.e. it describes the lateral vehicle states for each time point along the lateral path between an actual lateral lane position for the start time point of the control operation and the desired lateral lane position for the end time point of the control operation. In addition, the geometric model describes the lateral vehicle states with very good accuracy meaning that a very accurate feedforward control signal may be provided.

The terms "actual lateral lane position" and "desired lateral lane position" refer herein to a position in a lane in the lateral direction in relation to a predetermined reference (e.g. a lane line). The terms "actual lateral velocity", "path-based reference lateral velocity" and "desired lateral velocity" refer herein to a lateral velocity in relation to the lane/road. Likewise, the terms "actual lateral acceleration", "path-based reference lateral acceleration" and "desired lateral acceleration" refer herein to a lateral acceleration in relation to the lane/road.

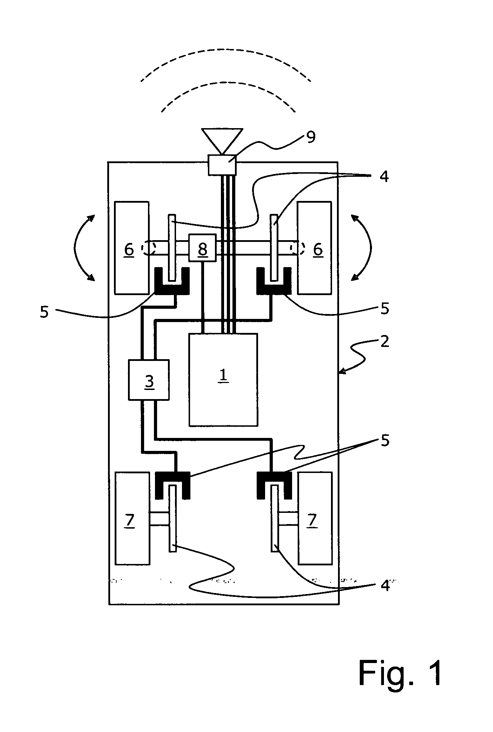

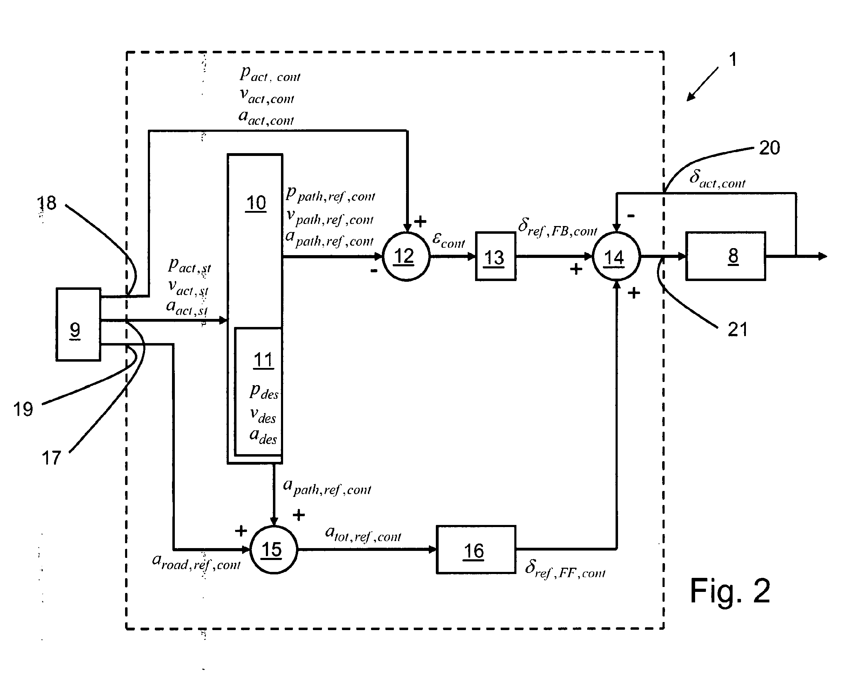

The system and method for controlling the lateral lane position of an automotive vehicle according to the invention will now be described in more detail with reference to the figures. Figure 1 illustrates schematically one embodiment of an automotive vehicle lateral lane position control system 1 in accordance with the present invention, whereby the control system 1 is arranged in one embodiment of an automotive vehicle 2. Figure 2 shows schematically the control system 1 of figure 1 in more detail. In figure 2 the boundaries of the control system 1 are indicated with dashed lines.

The vehicle 2 shown in figure 1 has a braking system 3 such as an Antilock Brake System (ABS system), e.g. with brake discs 4 and appertaining calipers 5 associated with each of the front wheels 6 and rear wheels 7 of the vehicle 2. The vehicle 2 further has a power steering system 8, which is arranged to control the steering angle of the front wheels 6. Typically, the steering system 8 comprises an electrical power steering unit (not shown), which is arranged to activate an actuator (not shown) attached to e.g. a conventional steering device (not shown) in order to control the steering angle of the front wheels 6. Furthermore, the control system 1 is connected to the steering system 8.

In addition, the vehicle 2 shown in figure comprises a camera based sensor unit 9, which is connected to the control system 1. As shown in figure 1, the camera based sensor unit 9 may be mounted to the front of the vehicle 2. However, the camera based sensor unit 9 may be mounted to any suitable part of the vehicle 2. The camera based sensor unit 9 will be further described below.

The control system 1 of the present invention is arranged to perform a control operation from a start time point to an end time point. During the control operation, the control system 1 is arranged to steer the vehicle 2 from an actual lateral lane position for the start time point to a desired lateral lane position for the end time point. The start of the control operation (i.e. activation of the control system 1) may be triggered by any suitable means and/or decision modules (not shown).

The control system 1 of the present invention will now be described in more detail with particular reference to figure 2. In the embodiment shown in figure 2, the control system 1 comprises a path calculator 10, means 11 comprising a desired lateral lane position *p_{des}* for an end time point of a control operation, a desired lateral velocity *v_{des}* for the end time point and a desired lateral acceleration *a_{des}* for the end time point, a control error determination means 12, a feedback controller 13, a steering angle error determination means 14, a lateral acceleration determination means 15, a unit 16 comprising a model of the inverse vehicle dynamics, a first information input 17, a second information input 18, a third information input 19, a steering angle input 20, and an output 21. However, the control system 1 may alternatively comprise any suitable number of inputs and outputs.

In the embodiment shown in figure 2, the first information input 17 is arranged for connection of the system 1 to means for provision of an actual lateral lane position *p_{act,st},* an actual lateral velocity *v_{act,st}* and an actual lateral acceleration *a_{act,st}* of the vehicle 2 for a start time point of a control operation. The second information input 18 is arranged for connection of the system 1 to means for provision of an actual lateral lane position *p_{act,cont},* an actual lateral velocity *v_{act,cont}* and an actual lateral acceleration *a_{act,cont}* of the vehicle 2 for a plurality of subsequent control time points. The subsequent control time points range from a time point, which is subsequent to the start time point, to the end time point of the control operation and will be further described below. The third information input 19 is arranged for connection of the system 1 to means for provision of a road-based reference lateral acceleration *a_{road, ref, cont}* for the plurality of subsequent control time points mentioned above. The road-based lateral acceleration *a_{road, ref, cont}* is the contribution to the lateral acceleration of the vehicle 2 by the curvature-of the road, and will be further described below.

In the embodiment shown in figure 2, the camera based sensor unit 9 constitutes the means for provision of the actual lateral lane position *p*_{*act*,*st*}, the actual lateral velocity *v_{act}, ₛₜ* and the actual lateral acceleration *a_{act, st}* of the vehicle 2 for a start time point of a control operation. In addition, the camera based sensor unit 9 constitutes the means for provision of an actual lateral lane position *p_{act, cont},* an actual lateral velocity *v_{act, cont}* and an actual lateral acceleration *aₐₑₗ, _{cont}* of the vehicle 2 for the plurality of subsequent control time points and the means for provision of a road-based reference lateral acceleration *a_{road,ref,cont}* for the plurality of subsequent control time points.

More specifically, in the embodiment shown in figure 2, the camera based sensor unit 9 is arranged to provide an actual lateral lane position *p_{act,st}* of the vehicle 2 for a start time point of a control operation to the path calculator 10 of the control system 1 via the first information input 17. In addition, in the embodiment shown in figure 2, the camera based sensor unit 9 is also arranged to provide an actual lateral velocity *v_{act,st}* of the vehicle 2 for the start time point and an actual lateral acceleration *a_{act, st}* of the vehicle 2 for the start time point to the path calculator 10 via the first information input 17.

Furthermore, in the embodiment shown in figure 2, the camera based sensor unit 9 is also arranged to provide an actual lateral lane position *p_{act,cont},* an actual lateral velocity *v_{act, cont}* and an actual lateral acceleration *a_{act, cont}* of the vehicle 2 for a plurality of subsequent control time points to the control error determination means 12 via the second information input 18. This will be further described below.

In addition, in the embodiment shown in figure 2, the camera based sensor unit 9 is arranged to provide a road-based reference lateral acceleration *a_{road, ref, cont}* for the plurality of subsequent control time points mentioned above to the lateral acceleration determination means 15 via the third information input 19. This will be further described below.

The camera based sensor unit 9 may comprise any suitable means for provision of an actual lateral lane position *p_{act, st},* an actual lateral velocity *v_{act, st}* and an actual lateral acceleration *a_{act, st}* of the vehicle 2 for a start time point of a control operation, and an actual lateral lane position *p_{act, cont},* an actual lateral velocity *v_{act, cont}* and an actual lateral acceleration *a_{act, cont}* of the vehicle 2 for subsequent control time points. For example, the camera based sensor unit 9 may comprise camera means, e.g. CCD camera means, for determining lateral lane position information, and means for determining the actual lateral velocity *v_{act, st}* and the actual lateral acceleration *a_{act, st}* for the start time point, and the actual lateral velocity *v_{act,cont}* and the actual lateral acceleration *a_{act,cont}* for subsequent control time points by signal processing of the lateral lane position information. However, the means for determining the actual lateral velocity *v_{act,st}* and the actual lateral acceleration *a_{act, st}* for the start time point, and the actual lateral velocity *v_{act, cont}* and the actual lateral acceleration *a_{act,cont}* for subsequent control time points may alternatively be comprised in one or more separate units (i.e. not included in the camera based sensor unit) and connected to the camera based sensor unit 9 and the path calculator 10. Still alternatively, the camera based sensor unit 9 or any separate unit may be arranged to determine the actual lateral acceleration *a_{act,st}* for the start time point and the actual lateral acceleration *a_{act,cont}* for subsequent control time points based on utilization of an actual longitudinal velocity for the start time point and the control time points, respectively, provided by a longitudinal velocity sensor unit (not shown), an actual yaw rate for the start time point and the control time points, respectively, provided by a yaw rate sensor unit (not shown) and a curvature of the road for the start time point and the control time points, respectively, provided by e.g. camera means.

Furthermore, the camera based sensor unit 9 may comprise any suitable means for determining the road-based reference lateral acceleration *a_{road, ref, cont}* for the plurality of subsequent control time points. For example, the camera based sensor unit 9 may comprise means for calculation of the road-based reference lateral acceleration *u_{road,ref,cont}* for the plurality of subsequent control time points from a road curvature for the plurality of subsequent control time points. However, alternatively the road-based reference lateral acceleration *a_{road, ref, cont}* may be determined in any other unit than the camera based sensor unit 9, which unit is connected to the camera based sensor unit 9 and the system 1.

Furthermore, any suitable sensor units for providing any further environment related information may also be connected to the camera based sensor unit 9. Likewise, any suitable sensor units for providing vehicle related information instead of, or in addition to, the above mentioned longitudinal velocity sensor unit and yaw rate sensor unit may also be connected to the camera based sensor unit 9. For example, a digital map provider (not shown) may be connected to the camera based sensor unit 9. The digital map provider is then arranged to provide digital map data from a database, particularly lane information. The map data is mapped to the actual vehicle position using e.g. GPS (GPS= Global Positioning System) or other location devices for determining the actual position of the vehicle 2. In addition, a vision sensor detecting lane markings may be connected to the camera based sensor unit 9.

However, the invention is not limited to utilization of the above described units for providing information comprising an actual lateral lane position, an actual lateral velocity and an actual lateral acceleration for a start time point of a control operation, an actual lateral lane position, an actual lateral velocity and an actual lateral acceleration for subsequent control time points and a road-based reference lateral acceleration for subsequent control time points, but any suitable means (i.e. one or more different units) for providing such information may be utilized and the information may be provided to the control system 1 via one or more information inputs of the control system 1. Thus, the system may comprise one or more information inputs for connection to means for providing information comprising an actual lateral lane position, an actual lateral velocity and an actual lateral acceleration for a start time point of a control operation, an actual lateral lane position, an actual lateral velocity and an actual lateral acceleration for a plurality of subsequent control time points and a road-based reference lateral acceleration for the plurality of subsequent control time points.

As mentioned above, the control system 1 comprises not only one or more information inputs, but comprises also a steering angle input 20. The steering angle input 20 is arranged for connection of the steering angle error determination means 14 to means for provision of an actual steering angle *δ_{act,cont}* for the plurality of subsequent control time points. This will be further described below.

In the embodiment shown in figure 2, the path calculator 10 includes the means 11 comprising information regarding a desired lateral lane position *p_{des}* for the end time point, a desired lateral velocity *v_{des}* for the end time point and a desired lateral acceleration *a_{des}* for the end time point. Thus, these parameters may be preset parameters in the control system 1.

In accordance with the above, the path calculator 10 is arranged to receive the actual lateral lane position *p_{act, st} ,* the actual lateral velocity *v_{act, st}* and the actual lateral acceleration *a_{act, st}* for the start time point from the camera based sensor unit 9 or from any other means in accordance with the above via the first information input 17. In addition, the path calculator 10 is arranged to provide a geometric model of a reference future lateral path of the vehicle 2 from the actual lateral lane position *p_{act, st} for* the start time point to the desired lateral lane position *p_{des}* for the end time point. In other words, the path calculator 10 is arranged to provide a geometric model of the lateral vehicle states during a control operation for steering the vehicle 2 from the actual lateral lane position *p_{act, st}* for the start time point to the desired lateral lane position *p_{des}* for the end time point. Thus, the geometric model describes the lateral vehicle states during the complete control operation, i.e. it describes the lateral vehicle states for each time point along the lateral path between the actual lateral lane position *p_{act, st}* for the start time point and the desired lateral lane position *p_{des}* for the end time point. The term "geometric model" means a model which describes the vehicle states without any inherent knowledge or description of the vehicle dynamics.

The geometric model comprises a lateral lane position function, which describes a path-based reference lateral lane position *p_{path,ref,cont}* of the vehicle 2 over time. More specifically, it describes a path-based reference lateral lane position *p_{path, ref, cont}* of the vehicle 2 between the start time point and the end time point. The term "path-based reference lateral lane position" means herein a position along the reference future lateral path that is calculated by the path calculator 10.

In addition, the geometric model comprises a lateral velocity function, a lateral acceleration function and a lateral jerk function, which are the first, second and third derivatives of the lateral lane position function.

The lateral velocity function describes a path-based reference lateral velocity *v_{pnth,ref,cont}* over time, i.e. for each time point along the reference future lateral path of the vehicle 2 from the actual lateral lane position *p_{act, st}* for the start time point to the desired lateral lane position *p_{des}* for the end time point. The term "path-based reference lateral velocity" means herein a lateral velocity along the reference future lateral path that is calculated by the path calculator 10.

The lateral acceleration function describes a path-based reference lateral acceleration *a_{path,ref,cont}* over time, i.e. for each time point along the reference future lateral path of the vehicle 2 from the actual lateral lane position *p_{act,st}* for the start time point to the desired lateral lane position *p_{des}* for the end time point. The term "path-based reference lateral acceleration" means herein a lateral acceleration along the reference future lateral path that is calculated by the path calculator 10.

In accordance with the above mentioned, the lateral lane position function fulfills preferably the following requirements:
- function start = actual lateral lane position for the start time point
- function end = desired lateral lane position for the end time point
- start of first derivative = actual lateral velocity for the start time point
- end of first derivative = desired lateral velocity for the end time point
- start of second derivative = actual lateral acceleration for the start time point
- end of second derivative = desired lateral acceleration for the end time point
- third derivative is always less than a defined maximum allowed jerk (design parameter), and
- the lateral lane position function and the first, second and third derivatives thereof are continuous functions.

Since the lateral lane position function has to be recomputed very often it has to belong to a class of functions that are easy to compute and have the ability to accurately approximate a complete set of desired shapes. Preferably, the lateral lane position function is a piecewise polynomial function. The piecewise polynomial function may be derived in the path calculator 10 by adapting a piecewise polynomial, which is continuous and whose first, second and third derivatives are continuous, to the above start and end requirements.

In addition, the path calculator 10 is arranged to provide the path-based reference lateral lane position *p_{path, ref,cont} ,* the path-based reference lateral velocity *v_{path,ref,cont}* and the path-based reference lateral *acceleration a_{path, ref, cont}* for the vehicle 2 for a plurality of subsequent control time points from the geometric model (i.e. from the lateral lane position function, the lateral velocity function and the lateral acceleration function, respectively), and to provide the path-based reference lateral lane position *p_{path,ref, cont}* , the path-based reference lateral velocity *v_{path, ref, cont}* and the path-based reference lateral acceleration *a_{path,ref,cont}* for the vehicle 2 for the plurality of subsequent control time points to the control error determination means 12 of the control system 1. As mentioned above, the subsequent control time points range from a time point, which is subsequent to the start time point of the control operation, to the end point of the control operation. The number of utilized control time points may vary and may, for example, depend on the length of the calculated path (i.e. the necessary length of a steering intervention which is described by the path calculated by the geometric model). Furthermore, the path calculator 10 is arranged to provide the path-based reference lateral acceleration *a_{path, ref, cont}* for the plurality of subsequent control time points to the lateral acceleration determination means 15 of the control system 1.

The control error determination means 12, the feedback controller 13, the steering angle error determination means 14, the lateral acceleration determination means 15 and the unit 16 comprising a model of the inverse vehicle dynamics of the control system 1 according to the invention constitute an arrangement for performing the following steps for each respective control time point:
- determining a control error ε*_{cont}* for the respective control time point by comparing the path-based reference lateral lane position *p_{path, ref, cont,}* the path-based reference lateral velocity *v_{path, ref, cont}* and the path-based reference lateral acceleration *a_{path, ref,cont}* for the respective control time point with the actual lateral lane position *p_{act,cont}* the actual lateral velocity *v_{act, cont}* and the actual lateral acceleration *a_{act,cont},* respectively, for the respective control time point. This step is performed by the control error determination means 12 of the control system 1, which is arranged to receive the path-based reference lateral lane position *p_{path, ref, cont},* the path-based reference lateral velocity *v_{path,ref,cont}* and the path-based reference lateral acceleration *a_{path, ref, cont}* for the respective control time point from the path calculator 10 and the actual lateral lane position *p_{act, cont},* the actual lateral velocity *v_{act, cont}* and the actual lateral acceleration *a_{act,cont}* for the respective control time point from the camera based sensor unit 9 or any other means in accordance with the above. Furthermore, the control error determination means 12 is arranged to compare the received path-based reference lateral lane position *p_{path,ref,cont}* reference lateral velocity *v_{path, ref,cont}* and reference lateral acceleration *a_{path,ref,cont}* with the received actual lateral lane position *p_{act, cont},* actual lateral velocity ν*_{act,cont}* and actual lateral acceleration *a_{act,cont}* so as to determine the control error ε*_{cont}* for the respective control time point. The determined control error ε*_{cont}* is constituted by a vector comprising the difference between the path-based reference lateral lane position *p_{path, ref, cont}* and the actual lateral lane position *p_{act,cont}* the difference between the path-based reference lateral velocity *v_{path, ref, cont}* and the actual lateral velocity *v_{act,cont}* and the difference between the reference lateral acceleration *a_{path,ref,cont}* and the actual lateral acceleration *a_{act,cont}.* The determined control error ε*_{cont}* is provided to the feedback controller 13 of the control system 1.
- calculating a reference feedback steering angle δ*_{ref, FB, cont}* for the respective control time point by applying a feedback control function on the control error ε*_{cont}* for the respective control time point. This step is performed by the feedback controller 13 of the control system 1, which is arranged to receive the control error ε*_{cont}* for the respective control time point from the control error determination means 12 and to calculate a reference feedback steering angle *δ_{ref, FB, cont}* for the respective control time point by applying a feedback control function on the control error *ε_{cont}* for the respective control time point. Any suitable feedback control function known in the art may be utilized. The feedback controller 13 is arranged to provide the calculated reference feedback steering angle *δ_{ref,FB,cont}* as a feedback control signal to the steering angle error determination means 14 of the control system 1.
- calculating a total reference lateral acceleration *a_{tot, ref, cont}* for the respective control time point by adding the path-based reference lateral acceleration *a_{path, ref, cont}* and the road-based reference lateral acceleration *a_{road, ref, cont}* for the respective control time point. This step is performed by the lateral acceleration determination means 15 of the control system 1, which is arranged to receive the path-based reference lateral acceleration *ap_{ath, ref, cont}* for the respective control time point from the path calculator 10 and the road-based reference lateral acceleration *a_{road}, _{ref, cont}* for the respective control time point from the camera based sensor unit 9 or from any other means for determination thereof in accordance with the above described. The road-based lateral acceleration *a_{road, ref, cont}* for the respective control time point is the contribution to the lateral acceleration of the vehicle 2 by the curvature of the road. In addition, the lateral acceleration determination means 15 is arranged to calculate the total reference lateral acceleration *a_{tot, ref, cont}* for the respective control time point point by adding the path-based reference lateral acceleration *a_{path, ref, cont}* and the road-based reference lateral acceleration *a_{road, ref, cont}* for the respective control time point. The total reference lateral acceleration *a_{tot, ref, cont}* is thereafter provided to the unit 16 comprising a model of the inverse vehicle dynamics.
- calculating a reference feedforward steering angle *δ_{ref,FF,cont}* for the respective control time point by applying a model of the inverse vehicle dynamics on the total reference lateral acceleration *a_{tot, ref, cont}* for the respective control time point. This step is performed by the unit 16 comprising a model of the inverse vehicle dynamics, which is arranged to receive the total reference lateral acceleration *a_{tot,ref,cont}* for the respective control time point and to calculate a reference feedforward steering angle *δ_{ref,FF, cont}* for the respective control time point by applying the model of the inverse vehicle dynamics on the total reference lateral acceleration *a_{tor, ref, cont}* for the respective control time point. The model of the inverse vehicle dynamics may be, for example, a static function or a linear model of the vehicle dynamics with two states ("bicycle model"). The linear model is multiplied with a high pass filter before inversion in order to make the inversion possible. The unit 16 comprising a model of the inverse vehicle dynamics is arranged to provide the reference feedforward steering angle *δ_{ref, FF, cont}* to the steering angle error determination means 14 as a feedforward control signal.
- adding the reference feedforward steering angle *δ_{ref,FF,cont, cont}* for the respective control time point to the reference feedback steering angle *δ_{ref,FB,cont}* for the respective control time point, and determining a steering angle error for the respective control time point by comparing the actual steering angle *δ_{act, cont}* for the respective control time point with the added reference feedforward steering angle δ*_{ref, FF,cont}* and reference feedback steering angle *δ_{ref,FB,cont}* for the respective control time point, and providing a steering signal for the respective control time point based on the steering angle error for the respective control time point. This step is performed by the steering angle error determination means 14, which is arranged to receive the reference feedback steering angle *δ_{ref, FB, cont}* for the respective control_time point from the feedback controller 13, the reference feedforward steering angle *δ_{ref, FF,cont}* for the respective control time point from the unit 16 comprising a model of the inverse vehicle dynamics and the actual steering angle *δ*_{*act,* cont} for the respective control time point from means for provision of the actual steering angle via the steering angle input 20. Furthermore, the steering angle error determination means 14 is arranged to add the reference feedforward steering angle *δ_{ref,FF,cont}* to the reference feedback steering angle *δ_{ref,FB,cont}* and to determine a steering angle error for the respective control time point by comparing the added steering angles with the actual steering angle δ*_{act,cont}*. In addition, the steering angle error determination means 14 is arranged to provide a steering signal for the respective control time point based on the steering angle error.

As mentioned above, the control system 1 comprises further an output 21 for providing the steering signal for each respective control time point to the steering system 8 from the steering angle error determination means 14.

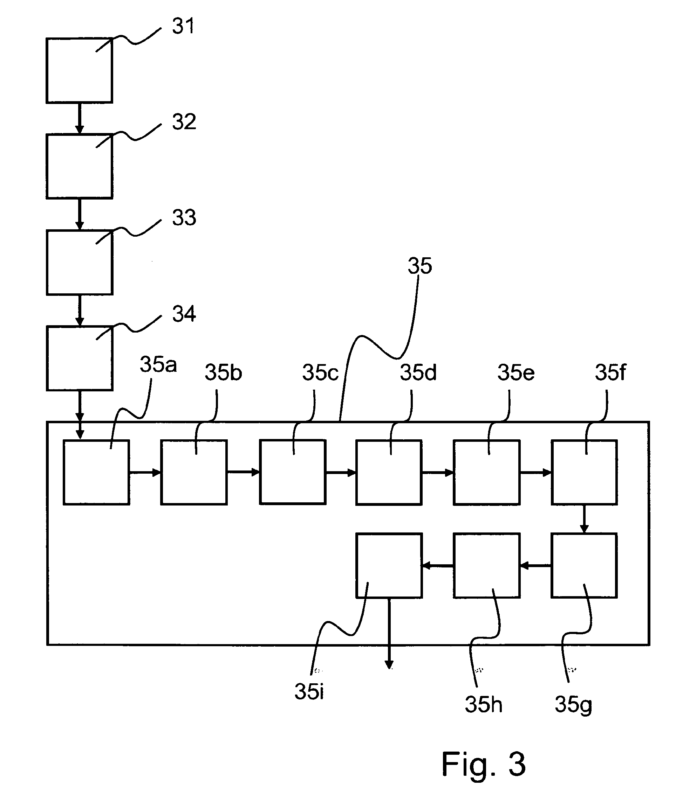

One embodiment of the method according to the invention will now be described with reference to figure 3, which shows a schematic flowchart of the method steps. The method according to the invention constitutes a method for controlling the lateral lane position of an automotive vehicle 2 during a control operation from a start time point to an end time point. During the control operation, the method provides steering of the vehicle 2 from an actual lateral lane position for the start time point to a desired lateral lane position for the end time point. The start of the control operation (i.e. start of the method) may be triggered by any suitable means and/or decision modules (not shown).

In a first step 31 an actual lateral lane position *p_{act,st},* an actual lateral velocity *v_{act, st},* and an actual lateral acceleration *a_{act, st}* for the start time point of the control operation are provided. As above described, the actual lateral lane position *p_{act, st} ,* the actual lateral velocity *v_{act, st}* and the actual lateral acceleration *a_{act, st}* may be provided by any suitable means. Thus, the actual lateral lane position *p_{act, st}* may, for example, be provided by the above described camera based sensor unit 9 (fig. 2). The actual lateral velocity *v_{act, st}* and the actual lateral acceleration *a_{act,st}* may, for example, be provided by signal processing of lateral lane position information provided by the camera based sensor unit 9. Alternatively, the actual lateral acceleration *a_{act, st}* may be provided based on utilization of an actual longitudinal velocity, an actual yaw rate and a curvature of the road.

In a second step 32 a desired lateral lane position *p_{des}* for the end time point of the control operation, a desired lateral velocity *v_{des}* for the end time point, and a desired lateral acceleration *a_{des}* for the end time point are provided. These parameters may be comprised in the above described means 11 of the control system 1. Thus, these parameters may be preset parameters.

In a third step 33 a geometric model of a reference future lateral path of the vehicle 2 from the actual lateral lane position *p_{act, st}* for the start time point to the desired lateral lane position *p_{des}* for the end time point is provided. The geometric model comprises a lateral lane position function describing a path-based reference lateral lane position *p*_{*path, ref,* cont} over time. More specifically, it describes a path-based reference lateral lane position *p_{path, ref, cont}* of the vehicle 2 between the start time point and the end time point. The geometric model corresponds to the geometric model described above in connection with the description of the control system 1 and may be provided in the path calculator 10 as described above. In accordance with the above, the geometric model comprises further a lateral velocity function, a lateral acceleration function and a lateral jerk function, which are the first, second and third derivatives of the lateral lane position function. The lateral velocity function describes a path-based reference lateral velocity *v_{path, ref,cont}* over time and the lateral acceleration function describes a path-based reference lateral acceleration *a_{path, ref, cont}* over time.

Preferably, the lateral lane position function fulfils the above defined requirements. Furthermore, the lateral lane position function is preferably a piecewise polynomial function. The piecewise polynomial function may be derived by adapting a piecewise polynomial, which is continuous and whose first, second and third derivatives are continuous, to the above defined start and end requirements.

In a fourth step 34 the path-based reference lateral lane position *p_{path, ref, cont}* the path-based reference lateral velocity *v_{path, ref, cont}* and the path-based reference lateral acceleration *a_{path, ref , cont}* for a plurality of subsequent control time points are provided from the geometric model. As mentioned above, the subsequent control time points range from a time point, which is subsequent to the start time point of the control operation, to the end point of the control operation. The number of utilized control time points may vary and may, for example, depend on the length of the calculated path (i.e. the necessary length of a steering intervention which is described by the path calculated by the geometric model).

In a fifth step 35 nine substeps 35a-35i are performed for each respective control time point. The substeps 35a-35i are described in the following for one respective control time point.

In a first substep 35a, an actual lateral lane position *p_{act, cont},* an actual lateral velocity *v_{act, cont}* and an actual lateral acceleration *a_{act, cont}* for the respective control time point are provided. These parameters may be provided by any suitable means as described above. For example, they may be provided by the camera based sensor unit 9 (fig. 2).

In a second substep 35b, a control error ε*_{cont}* is determined for the respective control time point by comparing the provided path-based reference lateral lane position *p_{path, ref, cont},* the path-based reference lateral velocity *v_{path, ref, cont}* and the path-based reference lateral acceleration *a_{path, ref, cont}* for the respective control time point with the provided actual lateral lane position *p_{act,cont},* the actual lateral velocity *v_{act, cont}* and the actual lateral acceleration *a_{act, cont}* for the respective control time point, respectively. This step may, for example, be performed by the control error determination means 12 described above. The determined control error ε*_{cont}* is constituted by a vector comprising the difference between the path-based reference lateral lane position *p_{path, ref, cont}* and the actual lateral lane position *p_{act, cont},* the difference between the path-based reference lateral velocity *v_{path, ref, cont}* and the actual lateral velocity *v_{act, cont},* and the difference between the path-based reference lateral acceleration *a_{path, ref, cont}* and the actual lateral acceleration *a*_{*act*, *cont*}.

In a third substep 35c, a reference feedback steering angle δ*_{ref,FB,cont}* for the respective control time point is calculated by applying a feedback control function on the determined control error ε*_{cont}* for the respective control time point. Any suitable feedback control function known in the art may be utilized. The feedback control function may, for example, be applied in the feedback controller 13 described above.

In a fourth substep 35d, a road-based reference lateral acceleration *a_{road, ref,cont}* for the respective control time point is provided. As above described, this parameter may be calculated from the road curvature for the respective control time point and may be provided by any suitable means, e.g. the camera based sensor unit 9.

In a fifth substep 35e, a total reference lateral acceleration *a_{tot, ref, cont}* for the respective control time point is calculated by adding the path-based reference lateral acceleration *a_{path, ref,cont}* and the road-based reference lateral acceleration *a_{road,ref,cont}* for the respective control time point. The addition may, for example, be performed by means of the lateral acceleration determination means 15 described above.

In a sixth substep 35f, a reference feedforward steering angle *δ_{ref,FF, cont}* for the respective control time point is calculated by applying a model of the inverse vehicle dynamics on the total reference lateral acceleration *a_{tot, ref, cont}* for the respective control time point. The model of the inverse vehicle dynamics may be, for example, a static function or a linear model of the vehicle dynamics with two states ("bicycle model"). The linear model is multiplied with a high pass filter before inversion in order to make the inversion possible. This calculation may, for example, be performed by means of the unit 16 comprising a model of the inverse vehicle dynamics as described above.

In a seventh substep 35g, an actual steering angle *δ_{act, cont}* for the respective control time point is provided. The actual steering angle may be provided by any suitable means. In an eighth substep 35h, the calculated reference feedforward steering angle *δ_{ref, FF, cont}* for the respective control time point is added to the reference feedback steering angle δ*_{ref, FB, cont}* for the respective control time point, and a steering angle error for the respective control time point is determined by comparing the actual steering angle δ*_{act, cont}* for the respective control time point with the added reference feedforward steering angle δ*_{ref, FF, cont}* and reference feedback steering angle δ*_{ref, FB, cont}* for the respective control time point. The addition and comparison may be performed by means of the above mentioned steering angle error determination means 14.

In a ninth substep 35i, a steering signal for the respective control time point based on the determined steering angle error for the respective control time point is provided to the steering system 8 of the vehicle 2. The steering signal may be provided by means of the above described steering angle error determination means 14.

Thus, by means of the system and method for controlling the lateral lane position of an automotive vehicle, an automatic steering from an actual lateral lane position *p_{act, st}* for a start time point of a control operation to a desired lateral lane position *p_{des}* for an end time point of the control operation may be achieved. The control technique in the system and method according to the invention is based on utilization of a geometric model of the lateral vehicle states during the control operation, i.e. a model describing the lateral vehicle states in each time point during the control operation is utilized. On the contrary, in conventional control techniques a model of the dynamics of the vehicle is usually utilized as either an integral part of the controller or for controller synthesis only.

The control technique according to the present invention involves utilization of a feedforward control signal which describes the required control signal for steering the vehicle to the desired lateral lane position when taking limitations on the vehicle dynamics into account and under the condition that no disturbances of the vehicle occur during the control operation. By adding this feedforward control signal to the feedback control signal, the feedback loop does only need to have high enough gain to be able to handle any disturbance that occurs during the control operation. Low feedback gain also means that the control signal activity is lowered and that the controller sensitivity to input delay and input noise is lowered a lot, while still retaining good controller performance in terms of quickly achieving the desired lateral lane position.

In the control technique according to the invention, the number of time points, for which the lateral vehicle states are controlled between the start time point and the end time point of a control operation (i.e. the number of control time points), may depend on the length of the calculated path (i.e. the necessary length of a steering intervention which is described by the path calculated by the geometric model). In addition, the intervals between different pairs of subsequent control time points may be the same or different. This implies that the lateral vehicle states may be controlled to different degrees during different parts of a control operation.

The present invention relates also to an automotive vehicle comprising the control system according to the invention.

The invention is not limited to the above-described embodiments, but may be varied within the scope of the following claims.

## Claims

1. A method for controlling the lateral lane position of an automotive vehicle (2) during a control operation from a start time point to an end time point, **characterized in, that** said method comprises the steps of:
- providing an actual lateral lane position, an actual lateral velocity and an actual lateral acceleration for said start time point;
- providing a desired lateral lane position, a desired lateral velocity and a desired lateral acceleration for said end time point;
- providing a geometric model of a reference future lateral path of said vehicle (2) from said actual lateral lane position for said start time point to said desired lateral lane position for said end time point, said geometric model comprising a lateral lane position function describing a path-based reference lateral lane position over time, a first derivative of said function describing a path-based reference lateral velocity over time, a second derivative of said function describing a path-based reference lateral acceleration over time and a third derivative of said function;
- providing said path-based reference lateral lane position, reference lateral velocity and reference lateral acceleration for a plurality of subsequent control time points from said geometric model, said subsequent control time points ranging from a time point, which is subsequent to said start time point, to said end time point;
- performing the following steps for each respective control time point:
o providing an actual lateral lane position, an actual lateral velocity and an actual lateral acceleration for the respective control time point;
o determining a control error for the respective control time point by comparing said path-based reference lateral lane position, reference lateral velocity and reference lateral acceleration for the respective control time point with said actual lateral lane position, actual lateral velocity and actual lateral acceleration for the respective control time point;
o calculating a reference feedback steering angle for the respective control time point by applying a feedback control function on said control error for the respective control time point;
o providing a road-based reference lateral acceleration for the respective control time point;
o calculating a total reference lateral acceleration for the respective control time point by adding said path-based reference lateral acceleration and said road-based reference lateral acceleration for the respective control time point;
o calculating a reference feedforward steering angle for the respective control time point by applying a model of the inverse vehicle dynamics on said total reference lateral acceleration for the respective control time point;
o providing an actual steering angle for the respective control time point;
o adding said reference feedforward steering angle to said reference feedback steering angle for the respective control time point and determining a steering angle error for the respective control time point by comparing said actual steering angle for the respective control time point with said added reference feedforward steering angle and reference feedback steering angle for the respective control time point, and
o providing a steering signal for the respective control time point based on said steering angle error for the respective control time point to a steering system (8) of said vehicle (2).

2. A method according to claim 1, **characterized in, that**
said lateral lane position function fulfils the requirements of:
- function start = said actual lateral lane position for said start time point
- function end = said desired lateral lane position for said end time point
- start of first derivative = said actual lateral velocity for said start time point
- end of first derivative = said desired lateral velocity for said end time point
- start of second derivative = said actual lateral acceleration for said start time point
- end of second derivative = said desired lateral acceleration for said end time point
- third derivative is less than a defined maximum allowed jerk, and
- said lateral lane position function and said first, second and third derivatives are continuous functions.

3. A method according to claim 1 or 2, **characterized in, that** said lateral lane position function is a piecewise polynomial function.

4. An automotive vehicle lateral lane position control system (1), which is arranged to perform a control operation from a start time point to an end time point, **characterized in, that** the control system (1) comprises:
- at least one information input (17, 18, 19) for connection to means (9) for provision of an actual lateral lane position, an actual lateral velocity and an actual lateral acceleration for said start time point, an actual lateral lane position, an actual lateral velocity and an actual lateral acceleration for a plurality of subsequent control time points, and a road-based reference lateral acceleration for said plurality of subsequent control time points, said subsequent control time points ranging from a time point, which is subsequent to said start time point, to said end time point;
- a steering angle input (20) for connection to means for provision of an actual steering angle for said plurality of subsequent control time points;
- means (11) comprising a desired lateral lane position, a desired lateral velocity and a desired lateral acceleration for said end time point;
- means (10) for providing a geometric model of a reference future lateral path of said vehicle (2) from said actual lateral lane position for said start time point to said desired lateral lane position for said end time point, said geometric model comprising a lateral lane position function describing a path-based reference lateral lane position over time, a first derivative of said function describing a path-based reference lateral velocity over time, a second derivative of said function describing a path-based reference lateral acceleration over time and a third derivative of said function, and for providing said path-based reference lateral lane position, reference lateral velocity and reference lateral acceleration for said plurality of subsequent control time points from said geometric model;
- an arrangement comprising means (12, 13, 14, 15, 16) for performing the following steps for each respective control time point:
o determining a control error for the respective control time point by comparing said path-based reference lateral lane position, reference lateral velocity and reference lateral acceleration for the respective control time point with said actual lateral lane position, actual lateral velocity and actual lateral acceleration for the respective control time point;
o calculating a reference feedback steering angle for the respective control time point by applying a feedback control function on said control error for the respective control time point;
o calculating a total reference lateral acceleration for the respective control time point by adding said path-based reference lateral acceleration and said road-based reference lateral acceleration for the respective control time point;
o calculating a reference feedforward steering angle for the respective control time point by applying a model of the inverse vehicle dynamics on said total reference lateral acceleration for the respective control time point, and
o adding said reference feedforward steering angle to said reference feedback steering angle for the respective control time point, and determining a steering angle error for the respective control time point by comparing said actual steering angle for the respective control time point with said added reference feedforward steering angle and reference feedback steering angle for the respective control time point, and providing a steering signal for the respective control time point based on said steering angle error for the respective control time point; and
- an output (21) for provision of said steering signal for each respective control time point to a steering system (8) of said vehicle (2).

5. A system according to claim 4, **characterized in, that** said lateral lane position function fulfils the requirements of:
- function start = said actual lateral lane position for said start time point
- function end= said desired lateral lane position for said end time point
- start of first derivative = said actual lateral velocity for said start time point
- end of first derivative = said desired lateral velocity for said end time point
- start of second derivative = said actual lateral acceleration for said start time point
- end of second derivative = said desired lateral acceleration for said end time point
- third derivative is less than a defined maximum allowed jerk, and
- said lateral lane position function and said first, second and third derivatives are continuous functions.

6. A system according to claim 4 or 5, **characterized in, that** said lateral lane position function is a piecewise polynomial function.

7. An automotive vehicle (2), **characterized in, that** it comprises an automotive vehicle lateral lane position control system (1) according to any one of claims 4-6.

## Patentansprüche

1. Verfahren zum Steuern der Querfahrspurposition eines Kraftfahrzeugs (2) während einer Steueroperation von einem Startzeitpunkt zu einem Endzeitpunkt,
**dadurch gekennzeichnet, dass** das Verfahren die folgenden Schritte umfasst:
- Bereitstellen einer Ist-Querfahrspurposition, einer Ist-Quergeschwindigkeit und einer Ist-Querbeschleunigung für den Startzeitpunkt;
- Bereitstellen einer Soll-Querfahrspurposition, einer Soll-Quergeschwindigkeit und einer Soll-Querbeschleunigung für den Endzeitpunkt;
- Bereitstellen eines geometrischen Modells eines künftigen Referenz-Querweges des Fahrzeugs (2) von der Ist-Querfahrspurposition für den Startzeitpunkt zu der Soll-Querfahrspurposition für den Endzeitpunkt, wobei das geometrische Modell eine Funktion der Querfahrspurposition, die eine wegbasierte Referenz-Querfahrspurposition im zeitlichen Verlauf beschreibt, eine erste Ableitung der Funktion, die eine wegbasierte Referenz-Quergeschwindigkeit im zeitlichen Verlauf beschreibt, eine zweite Ableitung der Funktion, die eine wegbasierte Referenz-Querbeschleunigung im zeitlichen Verlauf beschreibt, sowie eine dritte Ableitung der Funktion enthält;
- Bereitstellen der wegbasierten Referenz-Querfahrspurposition, Referenz-Quergeschwindigkeit und Referenz-Querbeschleunigung für mehrere aufeinanderfolgende Steuerzeitpunkte aus dem geometrischen Modell, wobei die aufeinanderfolgenden Steuerzeitpunkte in einem Bereich von einem Zeitpunkt, der dem Startzeitpunkt folgt, zu dem Endzeitpunkt liegen;
- Ausführen der folgenden Schritte für jeden entsprechenden Steuerzeitpunkt:
o Bereitstellen einer Ist-Querfahrspurposition, einer Ist-Quergeschwindigkeit und einer Ist-Querbeschleunigung für den jeweiligen Steuerzeitpunkt;
o Bestimmen eines Steuerfehlers für den jeweiligen Steuerzeitpunkt durch Vergleichen der wegbasierten Referenz-Querfahrspurposition, der Referenz-Quergeschwindigkeit und der Referenz-Querbeschleunigung für den jeweiligen Steuerzeitpunkt mit der Ist-Querfahrspurposition, der Ist-Quergeschwindigkeit bzw. der Ist-Querbeschleunigung für den jeweiligen Steuerzeitpunkt;
o Berechnen eines Referenz-Rückkopplungslenkwinkels für den jeweiligen Steuerzeitpunkt durch Anwenden einer Rückkopplungssteuerfunktion auf den Steuerfehler für den jeweiligen Steuerzeitpunkt;
o Bereitstellen einer straßenbasierten Referenz-Querbeschleunigung für den jeweiligen Steuerzeitpunkt;
o Berechnen einer gesamten Referenz-Querbeschleunigung für den jeweiligen Steuerzeitpunkt durch Addieren der wegbasierten Referenz-Querbeschleunigung und der straßenbasierten Referenz-Querbeschleunigung für den jeweiligen Steuerzeitpunkt;
o Berechnen eines Referenz-Vorwärtsregelungslenkwinkels für den jeweiligen Steuerzeitpunkt durch Anwenden eines Modells der inversen Fahrzeugdynamik auf die gesamte Referenz-Querbeschleunigung für den jeweiligen Steuerzeitpunkt;
o Bereitstellen eines Ist-Lenkwinkels für den jeweiligen Steuerzeitpunkt;
o Addieren des Referenz-Vorwärtsregelungslenkwinkels zu dem Referenz-Rückkopplungslenkwinkel für den jeweiligen Steuerzeitpunkt und Bestimmen eines Lenkwinkelfehlers für den jeweiligen Steuerzeitpunkt durch Vergleichen des Ist-Lenkwinkels für den jeweiligen Steuerzeitpunkt mit dem addierten Referenz-Vorwärtsregelungslenkwinkel für den jeweiligen Steuerzeitpunkt und
o Bereitstellen eines Lenksignals für den jeweiligen Steuerzeitpunkt anhand des Lenkwinkelfehlers für den jeweiligen Steuerzeitpunkt für ein Lenksystem (8) des Fahrzeugs (2).

2. Verfahren nach Anspruch 1, **dadurch gekennzeichnet, dass**
die Funktion der Querfahrspurposition die folgenden Anforderungen erfüllt:
- Funktionsstart - Ist-Querfahrspurposition für den Startzeitpunkt
- Funktionsende = Soll-Querfahrspurposition für den Endzeitpunkt
- Start der ersten Ableitung = Ist-Quergeschwindigkeit für den Startzeitpunkt
- Ende der ersten Ableitung = Soll-Quergeschwindigkeit für den Endzeitpunkt
- Start der zweiten Ableitung = Ist-Querbeschleunigung für den Startzeitpunkt
- Ende der zweiten Ableitung = Soll-Querbeschleunigung für den Endzeitpunkt
- dritte Ableitung ist kleiner als ein definierter maximal zulässiger Stoß und
- die Funktion der Querfahrspurposition und der ersten, der zweiten und der dritten Ableitungen sind stetige Funktionen.

3. Verfahren nach Anspruch 1 oder 2, **dadurch gekennzeichnet, dass**
die Funktionen der Querfahrspurposition eine stückweise polynomiale Funktion ist.

4. Kraftfahrzeug-Querfahrspurpositions-Steuersystem (1), das dazu ausgelegt ist, eine Steueroperation von einem Startzeitpunkt zu einem Endzeitpunkt auszuführen,
**dadurch gekennzeichnet, dass** das Steuersystem (1) Folgendes umfasst:
- wenigstens einen Informationseingang (17, 18, 19) für die Verbindung mit Mitteln (9) zum Bereitstellen einer Ist-Querfahrspurposition, einer Ist-Quergeschwindigkeit und einer Ist-Querbeschleunigung für den Startzeitpunkt, einer Ist-Querfahrspurposition, einer Ist-Quergeschwindigkeit und einer Ist-Querbeschleunigung für mehrere aufeinanderfolgende Steuerzeitpunkte und einer straßenbasierten Referenz-Querbeschleunigung für die mehreren aufeinanderfolgenden Steuerzeitpunkte, wobei die aufeinanderfolgenden Steuerzeitpunkte in einem Bereich von einem Zeitpunkt, der auf den Startzeitpunkt folgt, zu dem Endzeitpunkt liegen;
- einen Linkwinkeleingang (20) für die Verbindung mit Mitteln zum Bereitstellen eines Ist-Lenkwinkels für die mehreren aufeinanderfolgenden Steuerzeitpunkte;
- Mittel (11), die eine Soll-Querfahrspurposition, eine Soll-Quergeschwindigkeit und eine Soll-Querbeschleunigung für den Endzeitpunkt enthalten;
- Mittel (10), um ein geometrisches Modell eines künftigen Referenz-Querweges des Fahrzeugs (2) von der Ist-Querfahrspurposition für den Startzeitpunkt zu der Soll-Querfahrspurposition für den Endzeitpunkt bereitzustellen, wobei das geometrische Modell eine Funktion der Querfahrspurposition, die eine wegbasierte Referenz-Querfahrspurposition im zeitlichen Verlauf beschreibt, eine erste Ableitung der Funktion, die eine wegbasierte Referenz-Quergeschwindigkeit im zeitlichen Verlauf beschreibt, eine zweite Ableitung der Funktion, die eine wegbasierte Referenz-Querbeschleunigung im zeitlichen Verlauf beschreibt, und eine dritte Ableitung der Funktion enthält, und um die wegbasierte Referenz-Querfahrspurposition, Referenz-Quergeschwindigkeit und Referenz-Querbeschleunigung für die mehreren aufeinanderfolgenden Steuerzeitpunkte von dem geometrischen Modell bereitzustellen;
- eine Anordnung mit Mitteln (12, 13, 14, 15, 16), um für jeden entsprechenden Steuerzeitpunkt die folgenden Schritte auszuführen:
o Bestimmen eines Steuerfehlers für den jeweiligen Zeitpunkt durch Vergleichen der wegbasierten Referenz-Querfahrspurposition, Referenz-Quergeschwindigkeit und Referenz-Querbeschleunigung für den jeweiligen Steuerzeitpunkt mit der Ist-Querfahrspurposition, Ist-Quergeschwindigkeit bzw. Ist-Querbeschleunigung für den jeweiligen Steuerzeitpunkt;
o Berechnen eines Referenz-Rückkopplungslenkwinkels für den jeweiligen Steuerzeitpunkt durch Anwenden einer Rückkopplungssteuerfunktion auf den Steuerfehler für den jeweiligen Steuerzeitpunkt;
o Berechnen einer gesamten Referenz-Querbeschleunigung für den jeweiligen Steuerzeitpunkt durch Addieren der wegbasierten Referenz-Querbeschleunigung und der straßenbasierten Referenz-Querbeschleunigung für den jeweiligen Steuerzeitpunkt;
o Berechnen eines Referenz-Vorwärtsregelungslenkwinkels für den jeweiligen Steuerzeitpunkt durch Anwenden eines Modells der inversen Fahrzeugdynamik auf die gesamte Referenz-Querbeschleunigung für den jeweiligen Steuerzeitpunkt und
o Addieren des Referenz-Vorwärtsregelungslenkwinkels zu dem Referenz-Rückkopplungslenkwinkel für den jeweiligen Steuerzeitpunkt und Bestimmen eines Lenkwinkelfehlers für den jeweiligen Zeitpunkt durch Vergleichen des Ist-Lenkwinkels für den jeweiligen Steuerzeitpunkt mit der Summe aus dem Referenz-Vorwärtsregelungslenkwinkel und dem Referenz-Rückkopplungslenkwinkel für den jeweiligen Steuerzeitpunkt und Bereitstellen eines Lenksignals für den jeweiligen Steuerzeitpunkt anhand des Lenkwinkelfehlers für den jeweiligen Steuerzeitpunkt; und
- einen Ausgang (21) zum Bereitstellen des Lenksignals für jeden entsprechenden Steuerzeitpunkt für ein Lenksystem (8) des Fahrzeugs (2).

5. System nach Anspruch 4, **dadurch gekennzeichnet, dass** die Funktion der Querfahrspurposition die folgenden Anforderungen erfüllt:
- Funktionsstart - Ist-Querfahrspurposition für den Startzeitpunkt
- Funktionsende - Soll-Querfahrspurposition für den Endzeitpunkt
- Start der ersten Ableitung = Ist-Quergeschwindigkeit für den Startzeitpunkt
- Ende der ersten Ableitung = Soll-Quergeschwindigkeit für den Endzeitpunkt
- Start der zweiten Ableitung = Ist-Querbeschleunigung für den Startzeitpunkt
- Ende der zweiten Ableitung = Soll-Querbeschleunigung für den Endzeitpunkt
- dritte Ableitung ist kleiner Als ein definierter maximal zulässiger Stoß und
- die Funktion der Querfahrspurposition und der ersten, der zweiten und der dritten Ableitungen sind stetige Funktionen.

6. System nach Anspruch 4 oder 5, **dadurch gekennzeichnet, dass** die Funktion der Querfahrspurposition eine stückweise polynomiale Funktion ist.

7. Kraftfahrzeug (2), **dadurch gekennzeichnet, dass** es ein Kraftfahrzeug-Querfahrspurpositions-Steuersystem (1) nach einem der Ansprüche 4-6 umfasst.

## Revendications

1. Procédé de commande de la position latérale sur une voie d'un véhicule automobile (2) au cours d'une opération de commande entre un instant de début et un instant de fin, ledit procédé étant **caractérisé en ce qu'**il comprend les étapes consistant à :
- fournir une position latérale effective sur la voie, une vitesse latérale effective et une accélération latérale effective pour ledit instant de début ;
- fournir une position latérale souhaitée sur la voie, une vitesse latérale souhaitée et une accélération latérale souhaitée pour ledit instant de fin ;
- fournir un modèle géométrique d'une trajectoire latérale future de référence dudit véhicule (2) entre ladite position latérale effective sur la voie pour ledit instant de début et ladite position latérale souhaitée sur la voie pour ledit instant de fin, ledit modèle géométrique comprenant une fonction de position latérale sur la voie décrivant une position latérale de référence sur la voie basée sur la trajectoire au fil du temps, une dérivée première de ladite fonction décrivant une vitesse latérale de référence basée sur la trajectoire au fil du temps, une dérivée seconde de ladite fonction décrivant une accélération latérale de référence basée sur la trajectoire au fil du temps et une dérivée troisième de ladite fonction ;
- fournir ladite position latérale de référence sur la voie basée sur la trajectoire, ladite vitesse latérale de référence et ladite accélération latérale de référence pour une pluralité d'instants de commande ultérieurs à partir dudit modèle géométrique, lesdits instants de commande ultérieurs allant d'un instant ultérieur audit instant de début jusqu'audit instant de fin ;
- exécuter, pour chaque instant de commande respectif, les étapes consistant à :
o fournir une position latérale effective sur la voie, une vitesse latérale effective et une accélération latérale effective pour l'instant de commande respectif ;
o établir une erreur de commande pour l'instant de commande respectif en comparant ladite position latérale de référence sur la voie basée sur la trajectoire, ladite vitesse latérale de référence et ladite accélération latérale de référence pour l'instant de commande respectif à ladite position latérale effective sur la voie, ladite vitesse latérale effective et ladite accélération latérale effective pour l'instant de commande respectif ;
o calculer un angle de braquage de référence en boucle fermée pour l'instant de commande respectif en appliquant une fonction de commande en boucle fermée sur ladite erreur de commande pour l'instant de commande respectif ;
o fournir une accélération latérale de référence basée sur la chaussée pour l'instant de commande respectif ;
o calculer une accélération latérale de référence totale pour l'instant de commande respectif en ajoutant ladite accélération latérale de référence basée sur la trajectoire et ladite accélération latérale de référence basée sur la chaussée pour l'instant de commande respectif ;
o calculer un angle de braquage de référence en boucle ouverte pour l'instant de commande respectif en appliquant un modèle de la dynamique inverse du véhicule sur ladite accélération latérale de référence totale pour l'instant de commande respectif ;
o fournir un angle de braquage effectif pour l'instant de commande respectif ;
o ajouter ledit angle de braquage de référence en boucle ouverte audit angle de braquage de référence en boucle fermée pour l'instant de commande respectif et établir une erreur d'angle de braquage pour l'instant de commande respectif en comparant ledit angle de braquage effectif pour l'instant de commande respectif auxdits angle de braquage de référence en boucle ouverte et angle de braquage de référence en boucle fermée ajoutés pour l'instant de commande respectif, et
o fournir à un système de direction (8) dudit véhicule (2) un signal de braquage pour l'instant de commande respectif sur la base de ladite erreur d'angle de braquage pour l'instant de commande respectif.

2. Procédé selon la revendication 1, **caractérisé en ce que** ladite fonction de position latérale sur la voie satisfait aux conditions nécessaires suivantes :
- début de la fonction = ladite position latérale effective sur la voie pour ledit instant de début,
- fin de la fonction = ladite position latérale souhaitée sur la voie pour ledit instant de fin,
- début de la dérivée première = ladite vitesse latérale effective pour ledit instant de début,
- fin de la dérivée première = ladite vitesse latérale souhaitée pour ledit instant de fin,
- début de la dérivée seconde = ladite accélération latérale effective pour ledit instant de début,
- fin de la dérivée seconde = ladite accélération latérale souhaitée pour ledit instant de fin,
- la dérivée troisième est inférieure à une suraccélération maximale admissible définie, et
- ladite fonction de position latérale sur la voie et lesdites dérivées première, seconde et troisième sont des fonctions continues.

3. Procédé selon la revendication 1 ou 2, **caractérisé en ce que** ladite fonction de position latérale sur la voie est une fonction polynomiale par morceaux.

4. Système de commande (1) de la position latérale sur une voie d'un véhicule automobile, conçu pour exécuter une opération de commande entre un instant de début et un instant de fin, le système de commande (1) étant **caractérisé en ce qu'**il comprend :
- au moins une entrée d'informations (17, 18, 19) destinée à être reliée à un moyen (9) servant à fournir une position latérale effective sur la voie, une vitesse latérale effective et une accélération latérale effective pour ledit instant de début, une position latérale effective sur la voie, une vitesse latérale effective et une accélération latérale effective pour une pluralité d'instants de commande ultérieurs, et une accélération latérale de référence basée sur la chaussée pour ladite pluralité d'instants de commande ultérieurs, lesdits instants de commande ultérieurs allant d'un instant ultérieur audit instant de début jusqu'audit instant de fin ;
- une entrée d'angle de braquage (20) destinée à être reliée à un moyen servant à fournir un angle de braquage effectif pour ladite pluralité d'instants de commande ultérieurs ;
- un moyen (11) comprenant une position latérale souhaitée sur la voie, une vitesse latérale souhaitée et une accélération latérale souhaitée pour ledit instant de fin ;
- un moyen (10) servant à fournir un modèle géométrique d'une trajectoire latérale future de référence dudit véhicule (2) entre ladite position latérale effective sur la voie pour ledit instant de début et ladite position latérale souhaitée sur la voie pour ledit instant de fin, ledit modèle géométrique comprenant une fonction de position latérale sur la voie décrivant une position latérale de référence sur la voie basée sur la trajectoire au fil du temps, une dérivée première de ladite fonction décrivant une vitesse latérale de référence basée sur la trajectoire au fil du temps, une dérivée seconde de ladite fonction décrivant une accélération latérale de référence basée sur la trajectoire au fil du temps et une dérivée troisième de ladite fonction, et à fournir ladite position latérale de référence sur la voie basée sur la trajectoire, ladite vitesse latérale de référence et ladite accélération latérale de référence pour ladite pluralité d'instants de commande ultérieurs à partir dudit modèle géométrique ;
- un montage comprenant des moyens (12, 13, 14, 15, 16) servant à exécuter, pour chaque instant de commande respectif, les étapes consistant à :
o établir une erreur de commande pour l'instant de commande respectif en comparant ladite position latérale de référence sur la voie basée sur la trajectoire, ladite vitesse latérale de référence et ladite accélération latérale de référence pour l'instant de commande respectif à ladite position latérale effective sur la voie, ladite vitesse latérale effective et ladite accélération latérale effective pour l'instant de commande respectif ;
o calculer un angle de braquage de référence en boucle fermée pour l'instant de commande respectif en appliquant une fonction de commande en boucle fermée sur ladite erreur de commande pour l'instant de commande respectif ;
o calculer une accélération latérale de référence totale pour l'instant de commande respectif en ajoutant ladite accélération latérale de référence basée sur la trajectoire et ladite accélération latérale de référence basée sur la chaussée pour l'instant de commande respectif ;
o calculer un angle de braquage de référence en boucle ouverte pour l'instant de commande respectif en appliquant un modèle de la dynamique inverse du véhicule sur ladite accélération latérale de référence totale pour l'instant de commande respectif, et
o ajouter ledit angle de braquage de référence en boucle ouverte audit angle de braquage de référence en boucle fermée pour l'instant de commande respectif et établir une erreur d'angle de braquage pour l'instant de commande respectif en comparant ledit angle de braquage effectif pour l'instant de commande respectif auxdits angle de braquage de référence en boucle ouverte et angle de braquage de référence en boucle fermée ajoutés pour l'instant de commande respectif, et fournir un signal de braquage pour l'instant de commande respectif sur la base de ladite erreur d'angle de braquage pour l'instant de commande respectif ; et
- une sortie (21) servant à fournir à un système de direction (8) dudit véhicule (2) ledit signal de braquage pour chaque instant de commande respectif.

5. Système selon la revendication 4, **caractérisé en ce que** ladite fonction de position latérale sur la voie satisfait aux conditions nécessaires suivantes :
- début de la fonction = ladite position latérale effective sur la voie pour ledit instant de début,
- fin de la fonction = ladite position latérale souhaitée sur la voie pour ledit instant de fin,
- début de la dérivée première = ladite vitesse latérale effective pour ledit instant de début,
- fin de la dérivée première = ladite vitesse latérale souhaitée pour ledit instant de fin,
- début de la dérivée seconde = ladite accélération latérale effective pour ledit instant de début,
- fin de la dérivée seconde = ladite accélération latérale souhaitée pour ledit instant de fin,
- la dérivée troisième est inférieure à une suraccélération maximale admissible définie, et
- ladite fonction de position latérale sur la voie et lesdites dérivées première, seconde et troisième sont des fonctions continues.

6. Système selon la revendication 4 ou 5, **caractérisé en ce que** ladite fonction de position latérale sur la voie est une fonction polynomiale par morceaux.

7. Véhicule automobile (2), **caractérisé en ce qu'**il comprend un système de commande (1) de la position latérale sur une voie du véhicule automobile selon l'une quelconque des revendications 4 à 6.
